# FASCICULE DE BREVET EUROPEEN

(11) **EP 0 407 317 B1**
(45) Date de publication et mention de la délivrance du brevet: **31.03.1993**
(21) Numéro de dépôt: 90420319.7
(22) Date de dépôt: 05.07.1990
(51) Int. Cl.: F04B 43/02, H02K 33/02

(54) **Pompe à membrane réglable**
Regelbare Membranpumpe
Adjustable membrane pump

(30) Priorité: 07.07.1989 FR 8909904
(43) Date de publication de la demande: 09.01.1991
(73) Titulaire: RENA S.A., F-74000 Meythet (FR)
(72) Inventeur: Point, Jacques, F-74000 Annecy (FR); Joulia, Pierre, F-74440 Saint Jorioz (FR)
(74) Mandataire: Gasquet, Denis

(56) Documents cités:
- CH-A- 516 253
- GB-A- 940 519
- GB-A- 2 081 521

## Description

La présente invention concerne une pompe à membrane réglable, destinée notamment au pompage de gaz tels que l'air, mais applicable aussi au pompage de liquides très volatils, selon le préambule de la revendication 1.

Plus particulièrement, cette invention se rapporte à une pompe à membrane, dans laquelle un bras vibrant, agissant sur la membrane qui sert à l'aspiration et du refoulement du fluide à pomper, est mis en oscillation par un électro-aimant alimenté en courant électrique alternatif ou continu, le bras oscillant étant lié par une extrémité au boîtier de la pompe et portant, à son autre extrémité, au moins un aimant permanent situé en regard de l'électro-aimant.

Dans les réalisations habituelles de ce genre de pompe, l'électro-aimant est monté en position fixe dans le boîtier de la pompe, de sorte qu'un entrefer de valeur constante est ménagé entre cet électro-aimant, d'une part, et le ou les aimants permanents portés par le bras vibrant, d'autre part. Pour le réglage du débit et/ou de la pression du fluide pompé, on utilise généralement soit un potentiomètre intercalé dans le circuit électrique d'alimentation de l'électro-aimant, soit un moyen réglable d'obturation de l'entrée du fluide dans la pompe, par exemple une vis avec un ressort venant obturer plus ou moins une entrée d'air.

Le potentiomètre a l'inconvénient d'être onéreux, notamment pour de petites pompes qui doivent rester des accessoires bon marché. La solution du moyen d'obturation réglable diminue le rendement de la pompe, et fait travailler le bras vibrant dans des conditions défavorables lorsque le débit est réduit ; le bras "force" par manque de fluide à l'aspiration, ce qui est un inconvénient pour la tenue mécanique des éléments de la pompe.

On connaît aussi, par le brevet suisse 516253 ou le brevet français équivalent 2068779, une pompe à membrane réglable, utilisable pour l'aération d'aquariums, dans laquelle l'électro-aimant est monté mobile en translation dans le boîtier de la pompe, dans le sens de son rapprochement ou de son éloignement du bras vibrant, de manière à permettre un réglage de l'entrefer qui sépare cet électro-aimant du ou des aimants permanents portés par le bras vibrant. Le réglage de débit et/ou de pression est ainsi obtenu par une variation d'entrefer, et ce principe simple permet un réglage plus précis qui ne crée pas de conditions de fonctionnement anormales pour le bras vibrant.

Toutefois, la réalisation décrite dans les documents précités conserve des inconvénients. En particulier, l'immobilisation de l'électro-aimant dans la position désirée, et la manoeuvre de cet électro-aimant pour son déplacement en translation, s'effectuent par un bouton extérieur fileté, vissé sur une courte tige filetée qui traverse une lumière longitudinale du boîtier de la pompe et qui est solidaire d'une plaque-support de l'électro-aimant, guidée longitudinalement mais non véritablement retenue. Ainsi, le réglage nécessite un certain dévissage du bouton de manoeuvre pour débloquer l'électro-aimant ; ce dernier a alors tendance à être attiré par l'aimant permanent du bras vibrant, de sorte que la manipulation lors du réglage est rendue imprécise. Pour la même raison, un réglage en cours de fonctionnement de la pompe est impossible : il est nécessaire d'arrêter la pompe avant de débloquer la bobine, celle-ci n'ayant alors plus une immobilisation suffisante étant une source de vibrations pouvant nuire à la pompe. Par ailleurs, la lumière longitudinale du boîtier de la pompe, nécessaire dans ce système de réglage, représente un risque du point de vue de la sécurité, car elle offre un accès permanent à l'intérieur de la pompe. Dans l'ensemble, ce système de réglage s'avère précaire, et ne répond à aucune exigence ergonomique quant à sa manipulation.

La présente invention vise à éliminer tous ces inconvénients, en fournissant un système de réglage amélioré du point de vue de la précision, de la fiabilité, de la commodité d'utilisation et de la sécurité, et permettant notamment de procéder sans risques à un réglage sans arrêter le fonctionnement de la pompe.

A cet effet, dans la pompe à membrane réglable objet de l'invention,l'électro-aimant possède des parties rectilignes de guidage montées coulissantes et retenues sur des glissières complémentaires formées dans le boîtier de la pompe, et cet électro-aimant comporte en outre une partie formant écrou, qui coopère avec une vis de réglage immobilisée en translation par rapport au boîtier mais montée libre en rotation, de manière à agir sur l'électro-aimant en lui donnant un mouvement de translation tendant à réduire ou augmenter l'entrefer. Les glissières, les parties rectilignes de guidage et la partie formant écrou peuvent résulter facilement de formes venant de moulage ou de surmoulage, respectivement sur le boîtier de pompe et sur l'électro-aimant, ce qui contribue à la simplicité et au faible coût du dispositif.

De toute façon, l'invention sera mieux comprise à l'aide de la description qui suit, en référence au dessin schématique annexé représentant, à titre d'exemple non limitatif, une forme d'exécution de cette pompe à membrane réglable ;
Figure 1 est une vue de face d'une pompe à membrane conforme à la présente invention, montrée ouverte pour faire apparaître les organes intérieurs ;
Figure 2 est une vue en coupe longitudinale de cette pompe, suivant II-II de figure 1 ;
Figure 3 en est une vue en coupe transversale, suivant III-III de figure 2.

Le dessin montre une pompe à air, dont les organes sont logés à l'intérieur d'un boîtier de pompe 1 traversé latéralement par une entrée d'air 2 et par une sortie d'air 3. L'entrée d'air 2 et la sortie d'air 3 sont raccordées à un corps de pompe 4, coiffé par une membrane déformable 5. Pour déformer alternativement la membrane 5, il est prévu un bras vibrant 6, mis en oscillation par un électro-aimant 7 dont la bobine 8 est alimentée en courant électrique alternatif ou continu par des conducteurs 9. Le bras vibrant 6 comprend un pied élastique 10 lié au boîtier 1, une tige allongée 11 liée en 12 à la membrane 5, et une tête élargie 13 qui porte au moins un aimant permanent 14, situé en regard de l'électro-aimant 7.

Cette disposition définit un entrefer entre l'électro-aimant 7, d'une part, et le ou les aimants permanents 14 portés par le bras vibrant 6, d'autre part. Cet entrefer est rendu réglable en prévoyant que l'électro-aimant 7 est monté mobile en translation, suivant la flèche double F, dans le boîtier de pompe 1.

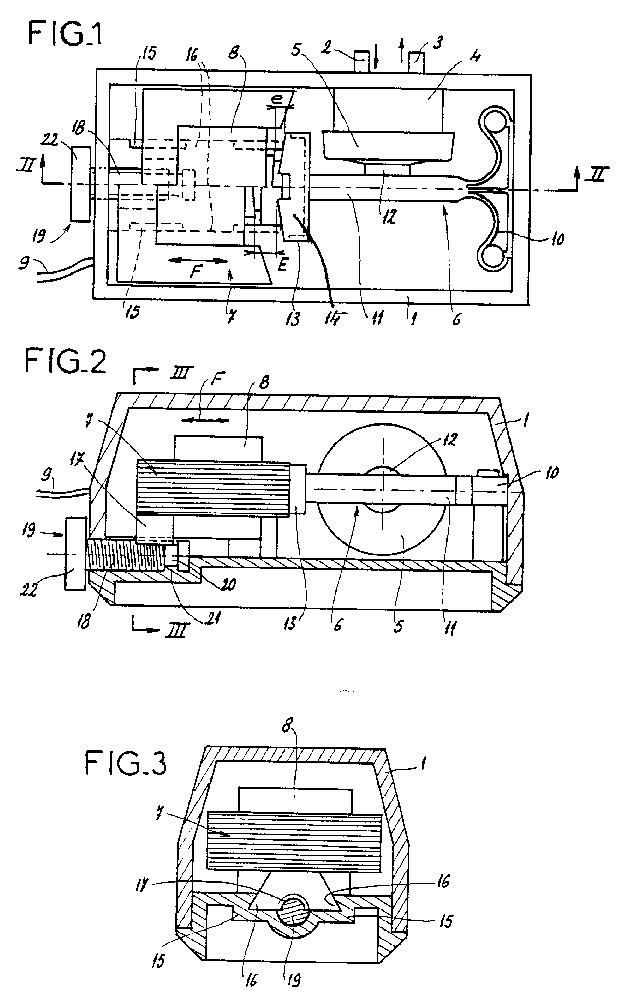

Plus particulièrement, le boîtier 1 comporte des glissières longitudinales 15, sur lesquelles sont montées coulissantes et retenues des parties de guidage complémentaires 16 appartenant à l'électro-aimant 7. Comme le montre notamment la figure 3, les glissières 15 et les parties complémentaires 16 peuvent posséder une configuration d'ensemble en "queue d'aronde".

L'électro-aimant 7 comporte en outre une partie 17 formant un demi-écrou qui coopère avec le filetage 18 d'une vis de réglage 19. La vis 19, montée libre en rotation dans le boîtier 1, comporte une gorge annulaire 20 qui assure son immobilisation en translation par rapport à une partie fixe complémentaire 21 appartenant au boîtier 1. Cette vis 19 traverse le boîtier 1 et possède une tête 22 située à l'extérieur, servant de bouton de manoeuvre.

Ainsi, en faisant tourner la vis de réglage 19, on provoque un déplacement en translation de l'électro-aimant 7, dans le sens de son rapprochement du bras vibrant 6 pour un sens donné de rotation de la vis 19, et dans le sens de son éloignement du bras vibrant 6 pour le sens de rotation opposé de la vis 19. On peut ainsi régler l'entrefer entre une valeur minimale e et une valeur maximale E, comme l'illustrent respectivement la moitié supérieure et la moitié inférieure de la figure 1. L'entrefer minimal e procure un rendement maximum de la pompe ; l'entrefer maximum E procure un rendement minimum de la pompe, et il minimise simultanément la fatigue mécanique du bras vibrant 6. Bien entendu, tous les réglages intermédiaires sont possibles, selon les caractéristiques de fonctionnement recherchées.

La pompe à membrane réglable, ici décrite, est applicable entre autres comme aérateur pour aquarium.

L'on ne s'éloignerait pas du cadre de l'invention :
- par des modifications constructives, concernant par exemple les détails de formes des moyens de guidage en translation pour l'électro-aimant mobile ;
- par des adaptations particulières, telles que la réalisation d'une pompe pourvue de deux bras vibrants et conservant le principe de l'invention pour le réglage ;
- par toutes variantes concernant l'alimentation électrique de l'électro-aimant, qui est réalisable soit en courant alternatif fourni par le secteur, soit en courant continu fourni par des piles ou des batteries ;
- par une utilisation différente, telle que le pompage de gaz autres que de l'air, voire de liquides très volatils.

## Revendications

1. Pompe à membrane réglable, pour le pompage de gaz ou de liquides très volatils, dans laquelle un bras vibrant (6), agissant sur la membrane (5) qui sert à l'aspiration et au refoulement du fluide à pomper, est mis en oscillation par un électro-aimant (7) alimenté en courant électrique alternatif ou continu, le bras vibrant (6) étant lié par une extrémité (10) au boîtier (1) de la pompe et portant, à son autre extrémité (13), au moins un aimant permanent (14) situé en regard de l'électro-aimant (7), l'électro-aimant (7) étant monté mobile en translation dans le boîtier (1) de la pompe, dans le sens de son rapprochement ou de son éloignement du bras vibrant (6), de manière à permettre un réglage de l'entrefer (e, E) qui sépare cet électro-aimant (7) du ou des aimants permanents (14) portés par le bras vibrant (6), caractérisée en ce que l'électro-aimant (7) possède des parties rectilignes de guidage (16) montées coulissantes et retenues sur des glissières complémentaires (15) formées dans le boîtier (1) de la pompe, et en ce que cet électro-aimant (7) comporte en outre une partie formant écrou (17), qui coopère avec une vis de réglage (19) immobilisée en translation (en 20) par rapport au boîtier (1) mais montée libre en rotation, de manière à agir sur l'électro-aimant (7) en lui donnant un mouvement de translation tendant à réduire ou augmenter l'entrefer (e,E).

2. Pompe à membrane réglable selon la revendication 1, caractérisée en ce que les glissières (15), les parties rectilignes de guidage (16) et la partie formant écrou (17) résultent de formes venant de moulage ou de surmoulage, respectivement sur le boîtier de pompe (1) et sur l'électro-aimant (7).

3. Pompe à membrane réglable selon la revendication 1 ou 2, caractérisée en ce que la glissière (15) et les parties rectilignes de guidage (16) possèdent une configuration en "queue d'aronde".

## Patentansprüche

1. Einstellbare Membranpumpe zum Pumpen von Gasen oder hochflüchtigen Flüssigkeiten, in der ein Schwingungsarm (6), der auf die Membran (5) einwirkt, die zum Ansaugen und Fördern des zu pumpenden Fluids dient, durch einen mit elektrischem Wechsel- oder Gleichstrom betriebenen Elektromagneten (7) in Schwingung versetzt wird, wobei der Schwingungsarm (6) mit einem Ende (10) am Gehäuse (1) der Pumpe befestigt ist und an seinem anderen Ende (13) wenigstens einen Permanentmagneten (14) trägt, der dem Elektromagneten (7) gegenüberliegend angeordnet ist, der seinerseits im Gehäuse (1) der Pumpe in Richtung seines Annäherns an den oder seines Entfernens von dem Schwingungsarm (6) verschieblich derart bewegbar angebracht ist, daß der Spalt (e, E), der diesen Elektromagneten (7) von dem oder den vom Schwingungsarm (6) getragenen Dauermagneten (14) trennt, einstellbar ist, **dadurch gekennzeichnet,** daß der Elektromagnet (7) geradlinige Führungsteile (16) aufweist, die auf komplimentären, im Gehäuse (1) der Pumpe angebrachten Gleitbahnen (15) gleitend verschieblich und gehaltert montiert sind, und daß dieser Elektromagnet (7) ferner einen eine Mutter (17) ausbildenden Abschnitt aufweist, der mit einer Einstellschraube (19) zusammenwirkt, die ihrerseits bezüglich des Gehäuses (1) nicht verschieblich (bei 20), aber frei verdrehbar so eingebaut ist, daß sie auf den Elektromagneten (7) einwirkt, wobei sie an ihn eine Verschiebebewegung zur Verkleinerung oder Vergrößerung des Spaltes (e, E) überträgt.

2. Einstellbare Membranpumpe nach Anspruch 1, dadurch gekennzeichnet, daß die Gleitbahnen (15), die geradlinigen Führungsteile (16) und der eine Mutter ausbildende Abschnitt (17) aus Formen hervorgehen, die gegossen oder am Gehäuse der Pumpe (1) bzw. am Elektromagneten (7) angegossen sind.

3. Einstellbare Membranpumpe nach Anspruch 1 oder 2, dadurch gekennzeichnet, daß die Gleitbahn (15) und die geradlinigen Führungsteile (16) in "Schwalbenschanz"-Anordnung ausgebildet sind.

## Claims

1. Adjustable diaphragm pump for pumping gases or highly volatile liquids, in which a vibrating arm (6), acting on the diaphragm (5), which serves for the suction and delivery of the fluid to be pumped, is set in oscillation by an electromagnet (7) supplied with AC or DC electric current, the vibrating arm (6) being connected at one end (10) to the casing (1) of the pump and carrying, at its other end (13), at least permanent magnet (14) situated opposite the electromagnet (7), the electromagnet (7) being mounted so as to be able to move in translation in the casing (1) of the pump, in a direction in which it approaches or moves away from the vibrating arm (6), so as to allow adjustment of the air gap (e, E) which separates this electromagnet (7) from the permanent magnet or magnets (14) carried by the vibrating arm (6), characterised in that the electromagnet (7) has rectilinear guide parts (16) mounted slidingly and held on complementary runners (15) formed in the casing (1) of the pump, and in that this electromagnet (7) also has a part forming a nut (17), which interacts with an adjusting screw (19) immobilised with respect to translational movement (at 20) with respect to the casing (1) but mounted so as to be free in rotation, so as to act on the electromagnet (7), giving it a translational movement resulting in a reduction or increase in the air gap (e, E).

2. Adjustable diaphragm pump according to Claim 1, characterised in that the runners (15), the rectilinear guide parts (16) and the part forming the nut (17) result from forms coming from moulding or overmoulding respectively on the pump casing (1) and on the electromagnet (7).

3. Adjustable diaphragm pump according to Claim 1 or 2, characterised in that the runner (15) and the rectilinear guide parts (16) have a "dovetail" configuration.
